# DEMANDE DE BREVET EUROPEEN

(11) **EP 3 671 519 A1**
(43) Date de publication de la demande: **24.06.2020**
(21) Numéro de dépôt: 19213442.7
(22) Date de dépôt: 04.12.2019
(51) Int. Cl.: G06F 21/77, G06Q 20/34, G07F 7/12

(54) **SÉCURISATION D'UNE TRANSACTION AU MOYEN D'UNE CARTE À PUCE ET CARTE À PUCE**

(30) Priorité: 18.12.2018 FR 1873214
(71) Demandeur: IDEMIA France, 92400 Courbevoie (FR)
(72) Inventeur: CHAMBEROT, Francis, 92400 COURBEVOIE (FR); REZZELI, Arezki, 92400 COURBEVOIE (FR)
(74) Mandataire: Santarelli

(57) **Abrégé**

L'invention concerne un procédé de gestion d'une carte à puce configurée pour sécuriser une transaction avec un dispositif externe via un lecteur de carte, le procédé étant caractérisé en ce qu'il comprend les étapes suivantes :
- incrémentation (E32) d'au moins un compteur de commandes reçues par la carte à puce pendant une transaction ;
- en fonction de la valeur courante dudit au moins un compteur et d'un profil de commandes, mise en œuvre (E36) d'une commande de gestion de la carte à puce.

## Description

### Domaine technique

L'invention est dans le domaine des transactions faisant intervenir des dispositifs sécurisés tels que des cartes à puces comprenant un élément sécurisé. Elle concerne, en particulier, un procédé de gestion d'une carte à puce configurée pour sécuriser une transaction, ainsi qu'une telle carte à puce.

### Etat de la technique

La présente invention concerne les transactions sécurisées du type transaction bancaire, faisant intervenir un dispositif de sécurité tel qu'une carte à puce. Par exemple, il s'agit d'une carte bancaire conforme à la norme EMV (pour Europay Mastercard Visa en terminologie anglo-saxonne) configurée pour mettre en œuvre des transactions EMV. Selon d'autres exemples il s'agit d'une carte de vote configurée pour effectuer des transactions de vote électronique, d'une carte personnelle configurée pour donner l'accès à des données sensibles du type données personnelles d'identité. Il s'agit par exemple d'une carte de santé (carte vitale), d'une carte d'identité, d'un passeport ou d'un permis de conduire.

Pour ce faire, la carte à puce comporte typiquement un élément sécurisé configuré pour communiquer avec un lecteur de carte (par exemple un terminal) par l'intermédiaire d'une interface de communication par exemple conforme à la norme ISO 7816 (communication à contact) ou aux normes ISO14443 ou NFC/ISO 15693 (communication sans contact). Ainsi, selon cette norme, l'élément sécurisé et le lecteur s'échangent des trames APDU (pour Application Protocol Data Unit en terminologie anglo-saxonne). Les trames APDU envoyées par le lecteur constituent des commandes.

Lors d'une transaction EMV, l'élément sécurisé exécute un certain nombre de commandes, par exemple pour sélectionner une application de paiement, fournir à l'application des informations pertinentes à l'initiation de la transaction ou fournir des informations sur la carte à puce au lecteur de carte, pour lire certaines données de la carte à puce, ou encore pour générer un cryptogramme afin de signer la transaction. D'autres types de commandes peuvent être exécutées.

Les commandes exécutées diffèrent légèrement selon que la transaction EMV est effectuée en ligne ou hors ligne. Il est rappelé que lors d'une transaction en ligne, l'entité émettrice de la carte (typiquement l'établissement bancaire associé) est consultée afin d'autoriser ou non la transaction. Au contraire, lors d'une transaction hors ligne, l'entité émettrice n'est pas consultée. Des critères de vérification enregistrés localement (typiquement sur la carte à puce) sont évalués par le lecteur de carte pour autoriser ou non la transaction.

Cependant, les lecteurs de carte ainsi que les cartes elles-mêmes peuvent être source et/ou cible de fraude. Le fait qu'un élément soit cible ou source de fraude dépend de qui est la victime (le porteur de la carte ou le tiers avec lequel la carte fait une transaction).

Par exemple, une carte à puce ou un lecteur peut être piraté dans le but de forcer une transaction hors ligne afin de créditer un compte bancaire de manière illégitime. Pour ce faire, un attaquant peut par exemple envoyer plusieurs fois la même commande à la carte à puce afin que celle-ci l'exécute plusieurs fois et étudier son comportement afin d'affiner son attaque. Dans la plupart des cas, la carte à puce ne considèrera pas cette situation comme anormale et continuera à répondre sans réagir. Une telle attaque est donc difficile à détecter.

Par ailleurs, une mauvaise version de configuration ou une mauvaise personnalisation de la carte à puce ou du lecteur peut affecter les performances de la carte ou du lecteur ou causer la divulgation d'informations sensibles. Ces situations sont également difficiles à détecter.

Il existe donc un besoin général pour améliorer la détection des comportements anormaux ou indésirables liés aux cartes à puce utilisées pour effectuer des transactions sécurisées.

### Exposé de l'invention

La présente invention a ainsi pour objet de pallier au moins un de ces inconvénients.

Dans ce contexte, un premier aspect de l'invention concerne un procédé de gestion d'une carte à puce configurée pour sécuriser une transaction avec un dispositif externe via un lecteur de carte, le procédé étant caractérisé en ce qu'il comprend les étapes suivantes :
- incrémentation d'au moins un compteur de commandes reçues par la carte à puce pendant une transaction ;
- en fonction de la valeur courante de l'au moins un compteur et d'un profil de commandes, mise en œuvre d'une commande de gestion de la carte à puce.

Corrélativement, un deuxième aspect de l'invention concerne une carte à puce configurée pour sécuriser une transaction avec un dispositif externe via un lecteur de carte, la carte à puce étant caractérisée en ce qu'elle comprend un élément sécurisé configuré pour mettre en œuvre les étapes suivantes :
- incrémentation d'au moins un compteur de commandes reçues par la carte à puce pendant une transaction ;
- en fonction de la valeur courante de l'au moins un compteur et d'un profil de commandes, mise en œuvre d'une commande de gestion de la carte à puce.

L'invention ainsi revendiquée permet d'améliorer la détection des comportements anormaux ou indésirables liés aux cartes à puce utilisées pour effectuer des transactions sécurisées.

En effet, la mise en œuvre de compteur(s) lié(s) aux commandes reçues par la carte permet de repérer et de qualifier les problèmes de manière plus fine et précise que dans l'art antérieur. Ceci permet de gérer la carte de manière adéquate lorsque des comportements déviants du profil attendu sont identifiés.

Typiquement, le profil de commandes définit la nature du ou des compteurs, une ou plusieurs valeurs ou proportions ou écarts limites entre différents compteurs, éventuellement une ou plusieurs commandes de gestion à mettre en œuvre selon la valeur du ou des compteurs.

D'autres caractéristiques du procédé et de la carte à puce selon des modes de réalisation de l'invention sont décrites dans les revendications dépendantes.

Dans des modes de réalisation, le dispositif externe peut être le lecteur de carte.

Dans des modes de réalisation, l'étape d'incrémentation d'au moins un compteur de commandes consiste à compter toutes les commandes reçues par la carte à puce pendant la transaction.

Dans des modes de réalisation, l'étape d'incrémentation met en œuvre plusieurs compteurs, chaque compteur étant associé à une commande d'un type donné parmi une pluralité de types de commandes reçues par la carte à puce pendant la transaction.

Dans des modes de réalisation, le profil définit des proportions ou écarts limites entre les valeurs des différents compteurs.

Dans des modes de réalisation, le profil définit, pour au moins un compteur, un nombre limite de commandes reçues par la carte à puce.

Dans des modes de réalisation, le procédé comprend une étape d'écriture de chaque commande reçue par la carte à puce pendant la transaction dans un registre mémoire dédié.

Dans des modes de réalisation, le procédé comprend une étape d'écriture des commandes et/ou des transactions lorsqu'au moins un compteur de commandes dépasse une certaine limite, dans un registre mémoire dédié.

Dans des modes de réalisation, la commande de gestion consiste à mettre en œuvre une contremesure sécuritaire dans la carte à puce.

Dans des modes de réalisation, la contremesure sécuritaire consiste à interrompre la transaction ou enregistrer un indicateur dédié dans une mémoire non volatile de la carte à puce ou à bloquer l'usage de la carte à puce temporairement ou de manière définitive.

L'indicateur dédié peut déclencher d'autres types d'actions.

Dans des modes de réalisation, la commande de gestion de la carte à puce comprend la mise à jour du profil de commandes ou d'au moins une donnée applicative.

Par exemple, la mise à jour du profil consiste à mettre à jour les limites associées aux compteurs, et/ou la commande de gestion à mettre en œuvre en cas d'éloignement par rapport à ces limites. A titre d'illustration, la mise à jour peut consister à remplacer l'écriture en mémoire d'un drapeau lock card par l'écriture en mémoire d'un drapeau kill card en cas de dépassement d'une limite associée à un compteur donné.

Par exemple, la mise à jour d'au moins une donnée applicative consiste à mettre à jour le montant maximal des transactions bancaires.

Dans des modes de réalisation, le procédé comprend une étape d'envoi, à une entité tierce, d'une information relative à la valeur courante du ou des compteurs.

Dans un mode de réalisation, cette information est la valeur courante du ou des compteurs.

Dans un autre mode de réalisation, cette information indique si la valeur courante du ou des compteurs est en dessous ou au-dessus de la valeur limite.

Dans des modes de réalisation, la commande de gestion de la carte à puce est ordonnée par l'entité tierce en réaction à l'information.

Dans des modes de réalisation, la commande de gestion consiste à envoyer une commande de mise à jour au lecteur de carte.

Dans des modes de réalisation, le procédé comprend une étape initiale de configuration du profil de commandes.

Dans des modes de réalisation, l'étape de mise à jour ou de configuration du profil comprend la réception et l'exécution d'au moins une commande d'un script de configuration ou de mise à jour définissant le profil de commandes ou au moins une donnée applicative.

Dans des modes de réalisation, le procédé comprend une étape d'identification d'un arrachage de la carte du lecteur de carte à puce avant la fin de la transaction.

Par exemple, un tel arrachage est identifié lorsqu'un compteur de transactions terminées a une valeur trop faible par rapport au nombre de transactions initiées.

Les avantages, buts et caractéristiques particulières de la carte à puce sont similaires à ceux du procédé précité.

Dans un mode particulier de réalisation, les différentes étapes du procédé précité sont déterminées par des instructions de programmes d'ordinateur.

En conséquence, l'invention vise aussi un programme d'ordinateur sur un support d'information, ce programme étant susceptible d'être mis en œuvre par un microprocesseur, ce programme comprenant des instructions adaptées à la mise en œuvre des étapes du procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information lisible par un microprocesseur, et comprenant des instructions d'un programme d'ordinateur tel que mentionné ci-dessus.

Le support d'information peut être n'importe quelle entité ou dispositif capable de stocker le programme. Par exemple, le support peut comprendre un moyen de stockage, tel qu'une ROM, par exemple une ROM de microcircuit, ou encore un moyen d'enregistrement magnétique, par exemple un disque dur, ou encore une mémoire flash.

D'autre part, le support d'information peut être un support transmissible tel qu'un signal électrique ou optique, qui peut être acheminé via un câble électrique ou optique, par radio ou par d'autres moyens. Le programme selon l'invention peut être en particulier téléchargé sur une plateforme de stockage d'un réseau de type Internet.

Alternativement, le support d'information peut être un circuit intégré dans lequel le programme est incorporé, le circuit étant adapté pour exécuter ou pour être utilisé dans l'exécution du procédé en question.

Le support d'information et le programme d'ordinateur précités présentent des caractéristiques et avantages analogues au procédé qu'ils mettent en œuvre.

### Brève description des dessins

D'autres particularités et avantages de l'invention apparaîtront encore dans la description ci-après, illustrée par les figures ci-jointes qui en illustrent des exemples de réalisation dépourvus de tout caractère limitatif.
[fig.1]

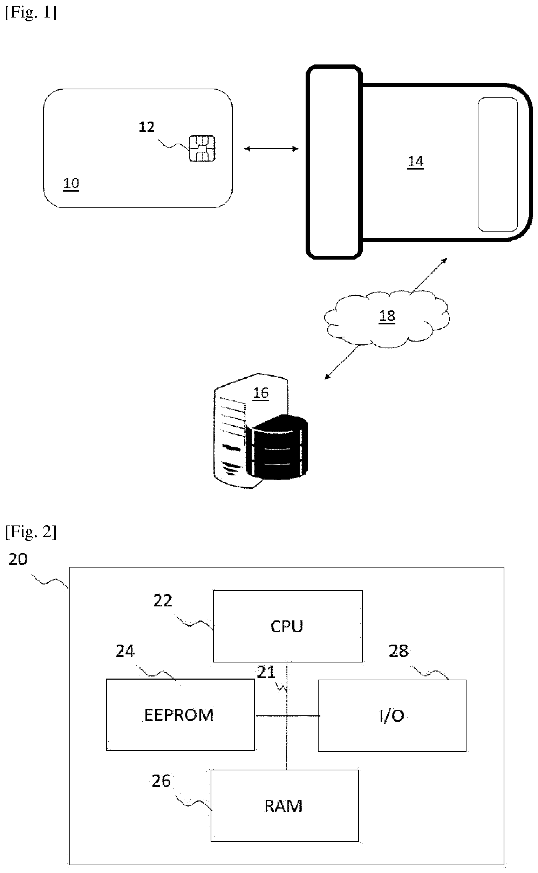

   La figure 1 représente un contexte dans lequel un procédé conforme à des modes de réalisation de l'invention peut être mis en œuvre.
[fig.2]
   La figure 2 représente un exemple d'architecture pour un dispositif conforme à des modes de réalisation de l'invention.
[fig.3]

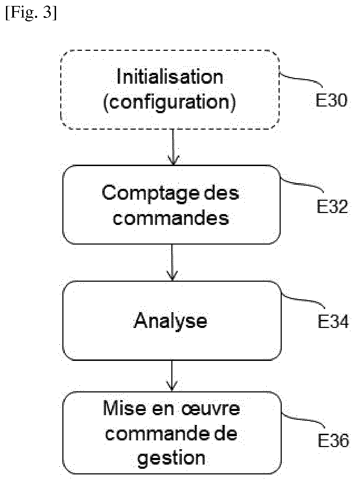

   La figure 3 représente, sous forme d'organigramme, des étapes générales d'un procédé conforme à des modes de réalisation de l'invention.

### Description détaillée

La f**igure 1** représente un contexte dans lequel un procédé conforme à des modes de réalisation de l'invention peut être mis en œuvre.

Dans cet exemple, un dispositif sécurisé 10 est configuré pour communiquer avec lecteur 14. Le lecteur 14 est lui-même configuré pour communiquer avec une entité tierce distante 16, via un réseau de communication 18.

Le dispositif sécurisé 10 est par exemple une carte à puce comprenant un élément sécurisé 12. Le lecteur 14 est par exemple un lecteur de carte à puce ou un terminal. L'entité tierce distante 16 est par exemple un serveur.

Dans un exemple particulier, les éléments représentés sur la figure 1 sont configurés pour mettre en œuvre une transaction bancaire, par exemple une transaction EMV. Ainsi, la carte à puce 10 est par exemple une carte bancaire EMV, le lecteur 14 est un terminal de paiement EMV avec ou sans contact et le serveur 16 est un serveur bancaire.

Dans un exemple particulier, la carte à puce 10 est configurée pour mettre en œuvre plusieurs applications sélectionnables par exemple par l'utilisateur. Il s'agit par exemple d'une application de paiement et d'une application de fidélité. Selon le ou les modes sélectionnés, la carte peut fonctionner comme une carte de paiement et/ou comme une carte de fidélité. D'autres applications peuvent être envisagées.

La **figure 2** représente un exemple d'architecture pour un dispositif sécurisé conforme à des modes de réalisation de l'invention, tel que le dispositif 10 de la figure 1.

Dans cet exemple, l'architecture 20 comprend un bus de communication 21 auquel sont reliés :
- une unité de traitement -ou microprocesseur- 22 notée CPU (sigle de Central Processing Unit en terminologie anglo-saxonne) ;
- une ou plusieurs mémoires non volatiles 24 par exemple EEPROM (acronyme de Electrically Erasable Programmable Read Only Memory en terminologie anglo-saxonne) pouvant constituer un support au sens de l'invention, c'est-à-dire pouvant comprendre un programme informatique comprenant des instructions pour la mise en œuvre d'un procédé selon l'invention ; cette mémoire non volatile peut en variante être une mémoire Flash ;
- une mémoire vive ou mémoire cache ou mémoire volatile 26 par exemple RAM (acronyme de Random Access Memory en terminologie anglo-saxonne) comprenant des registres adaptés à l'enregistrement des variables et paramètres créés et modifiés au cours de l'exécution du programme précité ; lors de la mise en œuvre de l'invention, les codes d'instructions du programme stocké en mémoire non volatile (e.g. EEPROM ou flash) sont chargés en mémoire RAM en vue d'être exécutés par l'unité de traitement CPU ; et
- une interface de communication 28 adaptée à transmettre et à recevoir des données, par exemple avec le lecteur 14.

Le bus de communication permet la communication et l'interopérabilité entre les différents éléments inclus dans le dispositif ou reliés à lui. La représentation du bus n'est pas limitative et, notamment, l'unité de traitement est susceptible de communiquer des instructions à tout élément du dispositif directement ou par l'intermédiaire d'un autre élément de ce dispositif.

Comme il sera décrit plus en détail en référence à la figure 3, un dispositif sécurisé conforme à des modes de réalisation est configuré pour sécuriser une transaction avec un lecteur de carte à l'aide d'un ou plusieurs compteurs de commandes (par exemple commandes APDU) reçues par la carte pendant une transaction.

La **figure 3** représente, sous forme d'organigramme, des étapes générales d'un procédé conforme à des modes de réalisation de l'invention.

Au cours d'une première étape optionnelle E30, au moins un compteur de commandes est configuré dans la carte à puce.

Cette étape de configuration est par exemple effectuée à l'aide d'une structure TLV (pour Tag Lenght Value) bien connue de l'homme du métier. Elle consiste par exemple à indiquer le type de commandes à compter, le profil de commandes attendu, ainsi qu'une commande de gestion à mettre en œuvre en cas de divergence et/ou de conformité par rapport au profil. Par exemple, ce profil peut définir une valeur limite pour le ou les compteurs. En variante, le profil peut définir une proportion à respecter entre différents types de commandes APDU. Par exemple, pour un fonctionnement optimal on s'attend à ce qu'il n'y ait qu'un seule commande GET RESP (Get response) par commande SELECT (commande qui permet de sélectionner l'application) reçue par la carte.

Selon des modes de réalisation, l'étape E30 peut comprendre la réception et l'exécution d'au moins une commande d'un script de configuration. Ce script de configuration décrit une séquence de commandes à mettre en œuvre pour configurer la carte. Ladite au moins une commande du script de configuration est par exemple reçue d'une entité tierce par exemple le serveur bancaire 16 de la figure 1. En variante, il peut s'agir de l'entité émettrice de la carte si celle-ci est différente.

Cette étape E30 est optionnelle et le compteur de commande peut avoir été préconfiguré lors de la personnalisation de la carte par l'émetteur de la carte. La préconfiguration peut être une configuration par défaut et peut être modifiée par la suite selon les besoins ou problèmes identifiés grâce au présent procédé.

Au cours d'une étape E32, une transaction est mise en œuvre entre la carte et le lecteur, après établissement de la connexion nécessaire entre ces deux entités. Durant cette transaction, la carte compte le nombre de commandes APDU qu'elle reçoit. En d'autres termes, à chaque réception d'une commande par la carte à puce, celle-ci incrémente la valeur courante d'un compteur de commandes (éventuellement parmi plusieurs compteurs).

La valeur du ou des compteurs est mémorisée en mémoire, par exemple dans la mémoire EEPROM 24 de la figure 2.

Selon un premier mode de réalisation, le nombre total de commandes APDU reçues et/ou exécutées pendant la transaction est comptabilisé.

Avantageusement, comme le profil d'une transaction, en termes de commandes échangées, est connu, il est possible de détecter rapidement une anomalie.

Dans le cas d'une carte multi applicative (c'est-à-dire pouvant mettre en œuvre plusieurs applications différentes), le profil d'une transaction dépend de l'application mise en œuvre. Par exemple, dans le cas où la carte met en œuvre l'application fidélité pendant la transaction, le nombre de commandes reçues par cette application au cours d'une transaction type est également connu, de sorte qu'il est également possible de détecter une anomalie au cours d'une transaction complexe.

À titre d'illustration, si le compteur comptabilise un nombre de commandes bien supérieur au cours d'une transaction, cela peut être révélateur d'une attaque par rejeu visant à étudier le comportement de la carte.

Selon une autre illustration, si le compteur comptabilise un nombre de commandes inférieur au cours d'une transaction, cela peut signifier que la carte a été arrachée ou déconnectée du lecteur (mode sans contact) avant la fin de la transaction. Un tel arrachage de la carte peut présenter un problème de sécurité puisqu'il peut empêcher la mise en œuvre d'une contremesure sécuritaire comme le blocage de la carte.

Un nombre de commandes inhabituel peut en variante être attribué un problème de personnalisation ou de configuration de la carte. De même, une analyse du compteur de différentes cartes utilisant le même lecteur peut révéler un problème logiciel (mise à jour ou configuration) au niveau du lecteur.

Selon un second mode de réalisation, plusieurs compteurs sont utilisés, chaque compteur comptabilisant le nombre de commandes APDU d'un certain type.

Par exemple, l'un des compteurs peut compter le nombre de transactions (par exemple ATC pour Application Transaction Counter), tandis qu'un autre compteur peut compter le nombre de commandes Get Response reçues par la carte. Un exemple détaillé est décrit ci-après.

Au cours d'une étape E34, la valeur du ou des compteurs est analysée par rapport au profil attendu.

Selon un premier mode de réalisation, la valeur de chaque compteur est comparée à une valeur limite associée dans le profil de commandes.

Selon un deuxième mode de réalisation, l'étape E34 consiste à analyser la proportion entre les différentes commandes par rapport au profil attendu.

Par exemple, cette étape consiste à comparer le quotient du compteur associé à une commande donnée par un compteur associé à une autre commande à un seuil. En variante, cette étape consiste à comparer le reste de la division euclidienne du compteur associé à une commande par un compteur associé à une autre commande à un seuil.

Selon un troisième mode de réalisation, l'étape E34 consiste à comparer l'écart entre les compteurs associés à différentes commandes à un seuil.

Au cours d'une étape E36, en fonction du résultat de l'étape E34, une commande de gestion de la carte est mise en œuvre. Par exemple, la commande de gestion peut consister à envoyer une information relative à la valeur courante du ou des compteurs au serveur distant 16 lors de la prochaine connexion, par exemple lors de la prochaine transaction en ligne. Par exemple, cette information est le résultat de l'analyse E34 et/ ou directement les valeurs analysées. En réaction, le serveur peut ordonner la mise en œuvre d'une autre commande de gestion de la carte, par exemple une contremesure sécuritaire, en réaction au nombre de commandes comptées ou au résultat de l'analyse E34. En variante, le serveur 16 ou la carte à puce peut envoyer au lecteur une commande de mise à jour.

Selon une variante, la carte à puce pourrait systématiquement envoyer l'information relative au(x) compteur(s) au serveur distant 16 et celui-ci pourrait mettre en œuvre l'étape E34 de façon déportée.

Selon un autre exemple, la commande de gestion peut consister à créer un historique (log) dans un registre mémoire dédié, par exemple en mémoire EEPROM 24, indiquant les commandes reçues et/ou listant les transactions dont le nombre dépasse une certaine limite. Cet historique peut également indiquer des informations relatives au contexte d'exécution desdites commandes et/ou transactions, par exemple l'interface de communication utilisée ou le montant de la transaction. En pratique, chaque commande reçue et exécutée par la carte à puce pendant une transaction peut être écrite dans l'historique, et ce pendant toutes les transactions. Lorsque l'historique est plein, les transactions qui se sont bien passées (limite non atteinte) sont effacées au profit des commandes reçues par la carte pendant une nouvelle transaction.

En variante, la commande de gestion peut consister en une contremesure sécuritaire par exemple l'émission d'une exception visant à interrompre la transaction, le blocage de la carte (« lock card »), ou l'écriture d'un drapeau « kill card » en mémoire de la carte. Il est rappelé que le lock card et kill card permettent de bloquer la carte tantôt de manière réversible (lock card), tantôt définitivement de manière irréversible (kill card). D'autres types de contremesures peuvent être mises en œuvre.

Selon une autre variante, la commande de gestion peut consister à mettre à jour le profil dont il est question à l'étape E30. Cette mise à jour peut être basée sur un script de mise à jour fonctionnant de manière similaire au script de configuration.

La commande de gestion peut également consister à ne pas exécuter une commande reçue lorsque le nombre limite est atteint pour ce type de commande.

À titre d'illustration uniquement, un exemple de configuration est indiqué ci-après :
*Tag Identifiant compteur 1*/ *Len 1*/ *Get response*/*Max Ins1* /*React Ins1*
*Tag identifiant compteur 2* /*Len 2* / *Read Records* / *Max Ins2* /*React Ins2*
*Tag identifiant compteur 3* / *Len 3* /*Put data ou Update records*/ *Max Ins3* /*React Ins3*
*Tag identifiant compteur 4* / *Len 4* / *identifiants commandes de paiement* / *Max Ins4* / *React Ins4*
*Tag identifiant compteur 5* /*Len 5* /*Nombre de transactions interrompues*/ *Max Ins5* /*React Ins5*
*Tag identifiant compteur 6* / *Len 6* / *Offline transaction*/ *Max Ins6* /*React Ins6*

Dans cet exemple, six compteurs sont utilisés.

La variable 'Tag identifiant compteur x' identifie le compteur x où x peut ici prendre les valeurs 1 à 6.

La variable 'Lenvx' indique la longueur des données associées au compteur x, incluant l'identifiant de la commande, le seuil associé au compteur et l'identifiant de la commande de gestion associée.

La variable 'React Ins x' identifie la commande de gestion à mettre en œuvre.

La variable 'Max Ins x' indique le nombre maximum de commandes pour le compteur x au-delà duquel une commande de gestion est mise en œuvre.

Le premier compteur compte le nombre de commandes APDU Get Response. Ce compteur permet par exemple de vérifier l'adéquation entre un volume de données échangé et la taille des buffers utilisés pour le faire. En effet, lorsque la taille d'un buffer de communication est trop petite par rapport au volume de données à échanger, plusieurs commandes Get Response sont nécessaires pour obtenir/envoyer l'ensemble des données. Un nombre de commandes Get Response trop élevé permettra donc de repérer un buffer de taille inapproprié.

Le second compteur compte le nombre de commandes APDU Read Records. Ce compteur peut révéler que le lecteur va consulter les registres de la carte alors que cela n'est pas nécessaire, ce qui peut indiquer un problème de configuration du lecteur.

Le troisième compteur compte le nombre de commandes de mise à jour du script. Ce compteur permet par exemple de vérifier la cohérence entre les commandes envoyées par le serveur 16 via le lecteur à la carte et les commandes réellement reçues par la carte. Toute commande supplémentaire, par exemple envoyée par un attaquant pour étudier le comportement de la carte, est alors repérée.

Le quatrième compteur peut compter par exemple l'une des commandes suivantes : Get_processing_option (GPO), Generate application cryptogram (GAC), ou External Authenticate (EA, Ext. Auth). Ainsi, ce quatrième compteur peut par exemple compter le nombre de commandes pour la génération d'un cryptogramme de paiement selon une méthode déterminée. Il est prévu par certains standards de paiement qu'une transaction de paiement puisse être validée par la carte au moyen d'un cryptogramme qui peut être généré selon différentes méthodes plus ou moins performantes les unes par rapport aux autres. Une commande peut être prévue pour chaque méthode de génération du cryptogramme. Ainsi, ce compteur permet par exemple de vérifier s'il y a un usage excessif d'une méthode de génération de cryptogramme, par exemple d'une méthode qui est moins sûre et/ou performante que d'autres. Un problème de configuration de la carte ou d'un terminal peut ainsi être identifié.

Le cinquième compteur compte le nombre de transactions n'ayant pas abouti par exemple en raison de l'arrachage de la carte ou d'une coupure de connexion avec le lecteur pendant la transaction. En pratique, ce compteur est incrémenté à chaque début de transaction puis décrémenté à chaque fois qu'une commande de fin de transaction est détectée, par exemple GAC1 TC ou AAC, GAC2 TC ou AAC, RR de fin d'AFL : acceptation ou refus de transaction. Si la transaction est interrompue, le compteur reste donc incrémenté. En revanche, si la transaction s'est terminée sans interruption, la valeur du compteur n'est pas incrémenté (cela résulte de l'incrémentation suivie de la décrémentation). Ainsi, une valeur importante de ce compteur signifie que le nombre de commandes qui n'ont pas abouti à une transaction est très important. Si la valeur de ce compteur est élevée pour un groupe donné de cartes, ceci peut révéler un problème de configuration ou d'attaque au niveau d'un lecteur de carte ou encore un problème de conception de ce groupe de carte par exemple dans le réglage des antennes si les transactions sont sans contact. Sans éléments concordants, il peut s'agir d'une carte attaquée pour comprendre son fonctionnement et mettre au point des attaques par analyse de consommation ou autres.

Le sixième compteur compte le nombre de transactions hors ligne (par opposition à en ligne). Ce compteur permet de vérifier la cohérence des différents compteurs, car la nature de la transaction (en ligne ou hors ligne) peut avoir un impact sur le nombre de commandes reçues. Cela permet aussi de détecter des fonctionnements anormaux : par exemple un chemin de paiement moins performant du fait d'incohérences dans les jeux de clés cryptographiques personnalisés dans le lecteur et la carte. Une commande permettant de savoir que la transaction est offline est par exemple une commande GAC1 TC ou AAC (Application Authentication Cryptogram). Ainsi le sixième compteur peut compter ces commandes.

Les exemples qui précèdent ne sont que des modes de réalisation de l'invention.

## Revendications

1. Procédé de gestion d'une carte à puce configurée pour sécuriser une transaction avec un dispositif externe via un lecteur de carte, le procédé étant **caractérisé en ce qu'**il comprend les étapes suivantes :
- incrémentation (E32) d'au moins un compteur de commandes reçues par la carte à puce pendant une transaction ;
- en fonction de la valeur courante dudit au moins un compteur et d'un profil de commandes, mise en œuvre (E36) d'une commande de gestion de la carte à puce.

2. Procédé selon la revendication 1, dans lequel l'étape d'incrémentation d'au moins un compteur de commandes consiste à compter toutes les commandes reçues par la carte à puce pendant la transaction.

3. Procédé selon la revendication 1 ou 2, dans lequel l'étape d'incrémentation met en œuvre plusieurs compteurs, chaque compteur étant associé à une commande d'un type donné parmi une pluralité de types de commandes reçues par la carte à puce pendant la transaction.

4. Procédé selon la revendication 3, dans lequel le profil définit des proportions ou écarts limites entre les valeurs des différents compteurs.

5. Procédé selon l'une quelconque des revendications précédentes, dans lequel le profil définit, pour au moins un compteur, un nombre limite de commandes reçues par la carte à puce.

6. Procédé selon l'une quelconque des revendications précédentes, comprenant une étape d'écriture de chaque commande reçue par la carte à puce pendant ladite transaction dans un registre mémoire dédié.

7. Procédé selon l'une quelconque des revendications précédentes, comprenant une étape d'écriture des commandes et/ou des transactions lorsqu'au moins un compteur de commandes dépasse une certaine limite, dans un registre mémoire dédié.

8. Procédé selon l'une quelconque des revendications précédentes, dans lequel la commande de gestion consiste à mettre en œuvre une contremesure sécuritaire dans la carte à puce.

9. Procédé selon la revendication 8, dans laquelle la contremesure sécuritaire consiste à interrompre la transaction ou enregistrer un indicateur dédié dans une mémoire non volatile de la carte à puce ou à bloquer l'usage de la carte à puce temporairement ou de manière définitive.

10. Procédé selon l'une quelconque des revendications précédentes, dans lequel la commande de gestion de la carte à puce comprend la mise à jour du profil de commandes ou d'au moins une donnée applicative.

11. Procédé selon l'une quelconque des revendications précédentes, comprenant une étape d'envoi, à une entité tierce, d'une information relative à la valeur courante dudit au moins un compteur.

12. Procédé selon la revendication 11, dans lequel la commande de gestion de la carte à puce est ordonnée par l'entité tierce en réaction à ladite information.

13. a commande de gestion consiste à envoyer une commande de mise à jour au lecteur de carte.

14. Procédé selon l'une quelconque des revendications précédentes, comprenant une étape initiale de configuration (E30) dudit profil de commandes.

15. Procédé selon la revendication 10 ou 14, dans lequel l'étape de mise à jour ou de configuration du profil comprend la réception et l'exécution d'au moins une commande d'un script de configuration ou de mise à jour définissant le profil de commandes ou d'au moins une donnée applicative.

16. Procédé selon l'une quelconque des revendications précédentes, comprenant une étape d'identification d'un arrachage de la carte du lecteur de carte à puce avant la fin de la transaction.

17. Carte à puce configurée pour sécuriser une transaction avec un dispositif externe via un lecteur de carte, la carte à puce étant **caractérisée en ce qu'**elle comprend un élément sécurisé configuré pour mettre en œuvre les étapes suivantes :
- incrémentation d'au moins un compteur de commandes reçues par la carte à puce pendant une transaction ;
- en fonction de la valeur courante dudit au moins un compteur et d'un profil de commandes, mise en œuvre d'une commande de gestion de la carte à puce.
